# EUROPEAN PATENT APPLICATION

(11) **EP 2 528 348 A1**
(43) Date of publication of application: **28.11.2012**
(21) Application number: 12168987.1
(22) Date of filing: 23.05.2012
(51) Int. Cl.: H04N 21/4782, H04N 21/433, H04N 21/235

(54) **Method of displaying a multimedia page on a television system and television system**

(30) Priority: 24.05.2011 TR 201105006
(71) Applicant: Vestel Elektronik Sanayi ve Ticaret A.S., 45030 Manisa (TR)
(72) Inventor: Church, Nick, 45030 Manisa (TR)
(74) Representative: Cayli, Hülya

(57) **Abstract**

The present invention comprises a method of displaying a multimedia page on a television system comprising at least a screen on which at least one hidden image plane and at least one visible image plane can be defined, wherein a first multimedia page (1) comprises at least one link (1a, 1b, 1c) related to a respective further multimedia page (2a, 2b, 2c), wherein the method comprises the steps of; discovering at least one link (1a, 1b, 1c) on the first page (1) related to a respective further page (2a, 2b, 2c); downloading the respective further page (2a, 2b, 2c), from a source; rendering the downloaded page (2a, 2b, 2c) on a hidden image plane on the screen; and, in response to a user request for the further page, making the hidden image plane containing the rendered further page visible.

## Description

### Technical Field

The present invention is related to a method of displaying a multimedia page on a television system.

### Prior Art

Many modern digital televisions such as IPTVs (Internet Protocol Televisions) use multimedia pages, such as Multimedia and Hypermedia Expert Group (MHEG) based interactive applications, to enable the user to access interactive applications such as online shopping systems, multimedia sharing systems. These devices usually access applications via an internet connection and download MHEG pages and render pages.

However, downloading MHEG pages and rendering pages on the television requires a significant time giving rise to a time delay before a selected page can be displayed to the user. This time delay stems from both the downloading time of an MHEG page and the rendering time of the page. As televisions lack digital processing power and cannot process an MHEG page as fast as a standard computer, the delay time between a user's page request and display of the page is significant.

Several solutions are proposed to reduce this delay time in the state of the art. The prior art document W02009/087549 A2 describes a pre-fetching method in which a client downloads content that is determined to be likely to be shown, before the request of the user for that content. The pre-fetched content is then rendered and shown when the user requests the content.

However the methods in the prior art are not adequate for MHEG applications on televisions to improve the rendering speed and reduce delay time as there is a significant delay time because of rendering time of the page.

### Brief Description of the Invention

The present invention comprises a method of displaying a multimedia page on a television system comprising at least a screen on which at least one hidden image plane and at least one visible image plane can be defined, wherein a first multimedia page comprises at least one link related to a respective further multimedia page, wherein the method comprises the steps of; discovering at least one link on the first page related to a respective further page; downloading the respective further page, from a source; rendering the downloaded page on a hidden image plane on the screen and in response to a user request for the further page, making the hidden image plane containing the rendered further page visible.

Within the method of the present invention, the system is accelerated for MHEG applications by utilizing the display time of an MHEG page to download and render possibly requested pages. Hence delay time for MHEG page transitions is eliminated.

### Object of the Invention

The object of the invention is to provide a rendering method for MHEG applications on televisions.

Another object of the invention is to provide a rendering method for MHEG applications on televisions to reduce display delay time of a MHEG page.

### Description of the Drawings

Embodiments of the present invention will now be described by way of example with reference to the accompanying drawings, in which:
**Figure 1** shows several MHEG pages in which one of the pages comprises three links to other pages;
**Figure 2** shows an example of rendering scheme of MHEG pages before another page is requested in accordance with a preferred embodiment of the present invention; and,
**Figure 3** shows an example of a rendering scheme of MHEG pages after another page is requested according to a preferred embodiment of the present invention.

The reference numbers as used in figures may possess the following meanings;

| | |
|---|---|
| MHEG page | (1) |
| Link A | (1a) |
| Link B | (1b) |
| Link C | (1c) |
| Page A | (2a) |
| Page B | (2b) |
| Page C | (2c) |

### Detailed Description of the Invention

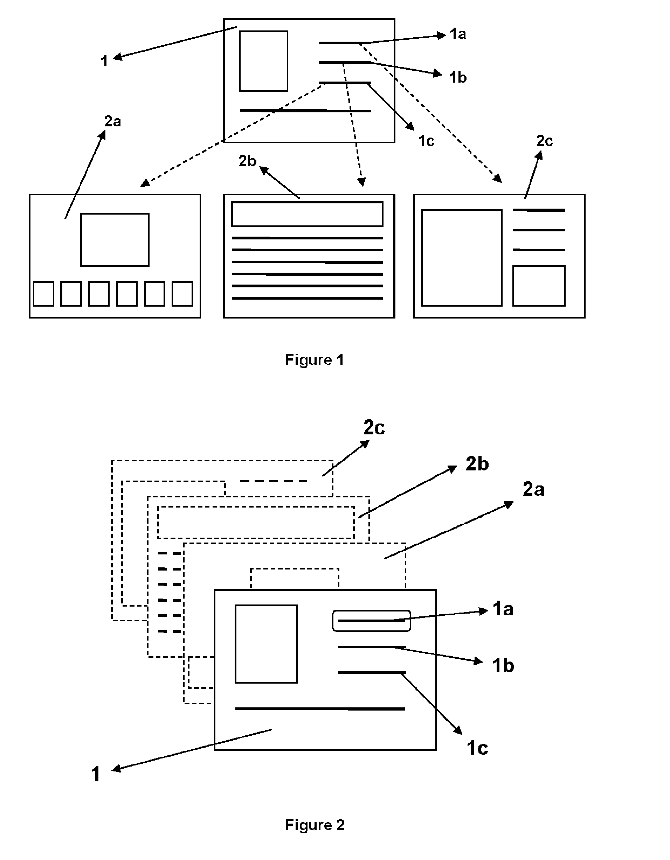

Figure 1 shows a basic Multimedia and Hypermedia Expert Group (MHEG) page (1) which comprises three links (1a, 1b, 1c) to three other pages (2a, 2b, 2c) respectively. Within the methods in the state of the art, when the user requests the MHEG page (1) the page is downloaded from the page source, rendered and shown on the display. Then the user is able to use one of the links (1a, 1b, 1 c) to access related pages (2a, 2b, 2c).

In digital televisions systems, it is commonly possible to define multiple image planes in a memory, on which different renders can be shown. These image planes may have a visibility property and it is also possible to render more than one image on more than one image planes and determine a transition between images by changing the visibility property of the image planes. The visibility property can be set to "hidden", which means the image plane is hidden, that is visibility is zero, or "visible", which means the image plane is visible and is shown for instance on the display of the television system.

Within the preferred method of the present invention, display of an MHEG page is done as follows;
- At least one link (1 a, 1b or 1c) is discovered on a first page which is related to a second MHEG page (2a, 2b or 2c);
- The related MHEG page (2a, 2b, 2c) is downloaded from a source if the page (2a, 2b, 2c) exists;
- When the download is completed, the page (2a, 2b, 2c) is rendered on the screen as a hidden image plane;
- When the user requests one of the pages (2a, 2b, 2c), the currently visible image plane is made hidden and an image plane containing the render of the requested page is made visible.

Preferably, within the time between the first display of a page and the request time of another page, i.e. the time during which the user is viewing the first page, possible page requests are evaluated and all linked pages are downloaded and rendered. When one of these pages is then requested by the user, instead of downloading and rendering a page in response to the request, the page which is already downloaded and rendered can be directly shown on the display and thus the delay time is eliminated.

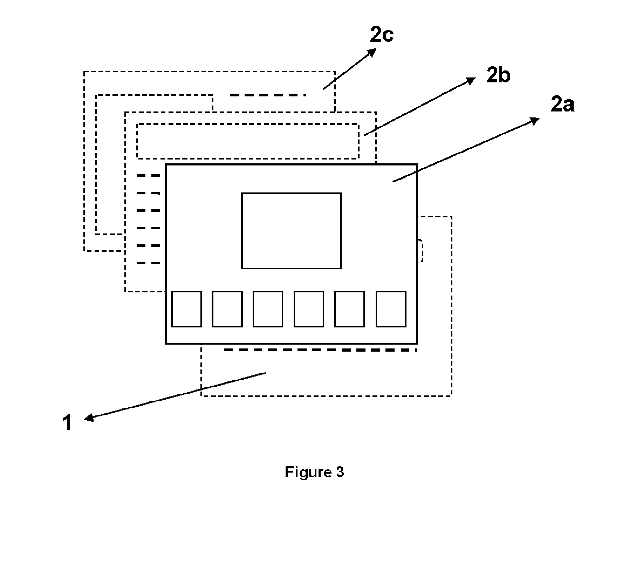

Figures 2 and 3 show MHEG pages which are to be displayed. While current page (1) is visible on the screen, the links (1a, 1b, 1c) on the current page (1) are discovered so as to download and render the pages (2a, 2b, 2c) those related with the links (1 a, 1b, 1 c). Then, pages (2a, 2b, 2c) are downloaded and rendered on hidden image planes as shown on figure 2. When one (2a) of the pages (2a, 2b, 2c) is requested by the user, the image plane containing current page (1) is made hidden and the image plane containing the requested page (2a) is made visible as shown in figure 3. At this point, the other rendered pages (2a, 2b, 2c) and preferably current page (1), i.e. the pages that were not requested by the user from the initial page, can be discarded from the memory in order to free memory for new pages. The process can then be repeated by discovering links on the newly displayed page and downloading/rendering the related pages.

This method takes advantage of the display time of a current page (1) by utilizing this time interval for downloading and rendering the content which is to be possibly requested. Hence, the time delay between the request of a page (2a) and displaying the page (2a) is eliminated without the need to increase processing capability of the system. The method takes the advantage of a render memory, which is preferably large enough to store several rendered frames, as frames of digital videos are rendered and stored in this render memory to be displayed sequentially.

The method can be extended or limited to process more or less pages. For instance, if the memory capacity is large enough to handle pages indirectly linked to the current page (1), e.g. via the related pages (2a, 2b, 2c) or other intervening pages, those pages may also be downloaded and rendered at the time of displaying the current page (1). On the other hand, it is possible to limit the number of related pages which are to be downloaded at the time of display of the current page (1), because of constraints on the memory size or the connection status. In this case, the related pages (2a, 2b, 2c) may be given priorities by analyzing several properties of the pages (2a, 2b, 2c). For instance, the pages (2a, 2b, 2c) may be downloaded and rendered in the ascending or descending order in terms of page size. In an embodiment of the invention, the priority of the pages (2a, 2b, 2c) may be given in accordance with the properties of the links (1a, 1b, 1c) in the current page (1). Hence, a more likely requested page (for instance 2a) may have a link (1a) which is written in bigger font size, bold etc. The method then takes the advantage of this significance to optimize the priorities of the pages (2a, 2b, 2c).

The preferred method thus enables acceleration of systems working with the MHEG applications. Consequently, the transition delay times between MHEG pages are substantially reduced or eliminated.

The method of the present invention is applicable to not only MHEG pages but also can be extended to other multimedia applications without any modifications in steps and any difficulty.

The preferred method can be carried out by circuitry within the television system, for example, by dedicated electronics, with discrete circuitry and/or dedicated ICs (integrated circuitry), by a suitably programmed microcontroller, CPU or FPGA (field programmable gate array), or indeed by any other suitable devices.

## Claims

1. A method of displaying a multimedia page on a television system comprising at least a screen on which at least one hidden image plane and at least one visible image plane can be defined, wherein a first multimedia page (1) comprises at least one link (1 a, 1b, 1c) related to a respective further multimedia page (2a, 2b, 2c), **characterized in that** the method comprises the steps of:
- discovering at least one link (1a, 1b, 1c) on the first page (1) related to a respective further page (2a, 2b, 2c);
- downloading the respective further page (2a, 2b, 2c), from a source;
- rendering the downloaded page (2a, 2b, 2c) on a hidden image plane on the screen; and,
- in response to a user request for the further page, making the hidden image plane containing the rendered further page visible.

2. A method according to claim 1, wherein the first page (1) on which a link (1 a, 1b, 1 c) is to be discovered is already rendered on a visible image plane.

3. A method according to claim 1, wherein the first page (1) on which a link (1 a, 1b, 1 c) is to be discovered is already rendered on a hidden image plane.

4. A method according to any of claims 1 to 3 wherein a plurality of further pages are downloaded and wherein the number of the downloaded pages (2a, 2b, 2c) is limited.

5. A method according to claim 1 or 4 wherein pages (2a, 2b, 2c) are given priorities in accordance with at least one property of the pages (2a, 2b, 2c) to determine which pages are to be downloaded and rendered.

6. A method according to claim 5, wherein said priority is determined in accordance with at least one property of the links (1a, 1b, 1c) which are related to the further pages (2a, 2b, 2c).

7. A method according to any of claims 1 to 6, wherein the multimedia pages are Multimedia and Hypermedia Expert Group applications.

8. A television system arranged to carry out the method of any of claims 1 to 7.
